Europäisches Patentamt

European Patent Office

Office européen des brevets

(11) Numéro de publication: **0 237 391**
**B1**

(12) **FASCICULE DE BREVET EUROPEEN**

(45) Date de publication du fascicule du brevet:
**12.12.90**

(21) Numéro de dépôt: **87400320.5**

(22) Date de dépôt: **13.02.87**

(51) Int. Cl.⁵: **C02F 3/12**, C02F 3/30,
B01D 21/00

(54) Procédé et dispositif pour le traitement des eaux usées.

(30) Priorité: **14.02.86 FR 8602008**

(43) Date de publication de la demande:
**16.09.87 Bulletin 87/38**

(45) Mention de la délivrance du brevet:
**12.12.90 Bulletin 90/50**

(84) Etats contractants désignés:
**AT BE CH DE ES GB GR IT LI LU NL SE**

(56) Documents cités:
**EP-A- 0 002 115**
**FR-A- 1 408 663**
**FR-A- 2 148 886**
**US-A- 3 709 792**
**US-A- 4 422 929**

(73) Titulaire: **Brucker, Christian, 58 Grande Rue Vicq,**
**F-78490 Montfort l'Amaury(FR)**

(72) Inventeur: **Brucker, Christian, 58 Grande Rue Vicq,**
**F-78490 Montfort l'Amaury(FR)**

(74) Mandataire: **CABINET BONNET-THIRION, 95 Boulevard**
**Beaumarchais, F-75003 Paris(FR)**

ACTORUM AG

## Description

Le procédé et le dispositif selon l'invention ont trait au traitement des eau% usées. Plus particulièrement, ils permettent d'améliorer l'épuration et la clarification de ces eaux usées.

On connaît déjà des stations d'épuration capables d'aérer et de clarifier des eaux polluées. En général ces stations d'épuration sont de grandes dimensions et sont scindées en sous-ensemble distincts ayant chacun leur fonction propre : à savoir, un bassin d'aération et un bassin de clarification distincts.

On connaît aussi, notamment par le brevet FR 2 148 886, des stations d'épuration de plus petites dimensions et de forme parallélépipédique où toutes les opérations nécessaires à l'épuration de l'eau se déroulent dans un seul et même bassin ; cependant l'épuration et la clarification des eaux traitées par ces stations posent encore des problèmes. En effet, les micro-organismes participant à l'épuration des eaux usées travaillent à faible rendement, en outre des remontées de boues vers la goulotte de récupération des eaux épurées sont souvent décelées.

L'invention a pour objet de pallier l'ensemble de ces problèmes.

A cet effet, l'invention concerne un dispositif de traitement des eaux usées préalablement dégrillées, dessablées et dégraissées, ledit dispositif comprenant :

- un bassin d'épuration unique parallélépipédique à fond plat,
- un moyen d'introduction des eaux usées à une extrémité amont dudit bassin,
- un moyen d'évacuation des eaux clarifiées à une extrémité avale dudit bassin, ledit bassin ayant une zone de décantation primaire adjacente à son extrémité amont, une zone de clarification adjacente à son extrémité avale, et une zone d'activation entre ladite zone de décantation primaire et la zone de clarification, ladite zone de clarification comportant une partie supérieure pour clarifier les eaux usées et une partie inférieure pour le stockage des boues et la récupération des gaz créés lors de la dénitrification et de la déphosphatation des boues situées sous le clarificateur, ladite partie supérieure de la zone de clarification comprenant une succession de cloisons d'inclinaisons alternées dont les crêtes et les arêtes basses sont jointives deux à deux, les crêtes formant un rétreint avec la surface supérieure du plan d'eau et les eaux usées décantées et aérées entrant dans ledit clarificateur par sa partie haute, ledit clarificateur étant en outre muni d'un filtre,
- un aérateur monté pour mouvement alternatif dans ladite zone d'activation et pour fonctionnement uniquement dans cette zone,
- un moyen de remaniement des boues monté pour mouvement alternatif entre la zone de décantation primaire et la partie inférieure de la zone de clarification, ledit moyen de remaniement étant adapté à s'engager au-dessous du clarificateur jusqu'à toucher une paroi transversale d'une part et dans la zone de décantation primaire jusqu'à toucher une paroi transversale d'autre part, le moyen de remaniement des boues étant monté sur un translateur muni d'une jupe destinée à confiner les turbulences créées par l'aérateur à l'aval de ladite jupe.

L'invention concerne également un procédé de traitement des eaux usées mettant en œuvre le dispositif ci-dessus décrit, ledit procédé comportant les étapes suivantes :
- introduction des eaux usées dans un bassin parallélépipédique à fond plat,
- décantation primaire de ces eaux dans une zone de décantation primaire adjacente à l'extrémité amont du bassin,
- activation des eaux décantées par oxygénation à forte, moyenne puis faible charge massique au fur-et-à-mesure du déplacement d'un aérateur de l'amont vers l'aval du bassin et vice-versa,
- récupération et remaniement des boues créées lors des étapes de décantation primaire et d'activation au moyen de râcleurs qui les remanient et les stockent sous formes de talus dans les zones de décantation et d'activation et dans une zone de stockage située sous un clarificateur,
- filtration horizontale au moyen d'éléments filtrants biologiques et/ou mécaniques,
- passage des eaux en provenance de la zone d'activation dans la zone de clarification par le dessus d'un clarificateur,
- clarification des eaux introduites dans le clarificateur au moyen de cloisons à inclinaisons alternées favorisant la sédimentation des flocs, ledit clarificateur étant à flux laminaire horizontale et,
- évacuation des eaux clarifiées à l'extérieur dudit bassin parallélépipédique.

D'autres caractéristiques et avantages de l'invention ressortiront d'ailleurs de la description qui suit, donnée à titre d'exemple non limitatif en référence aux dessins annexés dans lesquels :

la figure 1 représente un dispositif selon l'invention en coupe selon la ligne I-I de la figure 2 ;
la figure 2 est une vue en plan du dispositif selon l'invention.

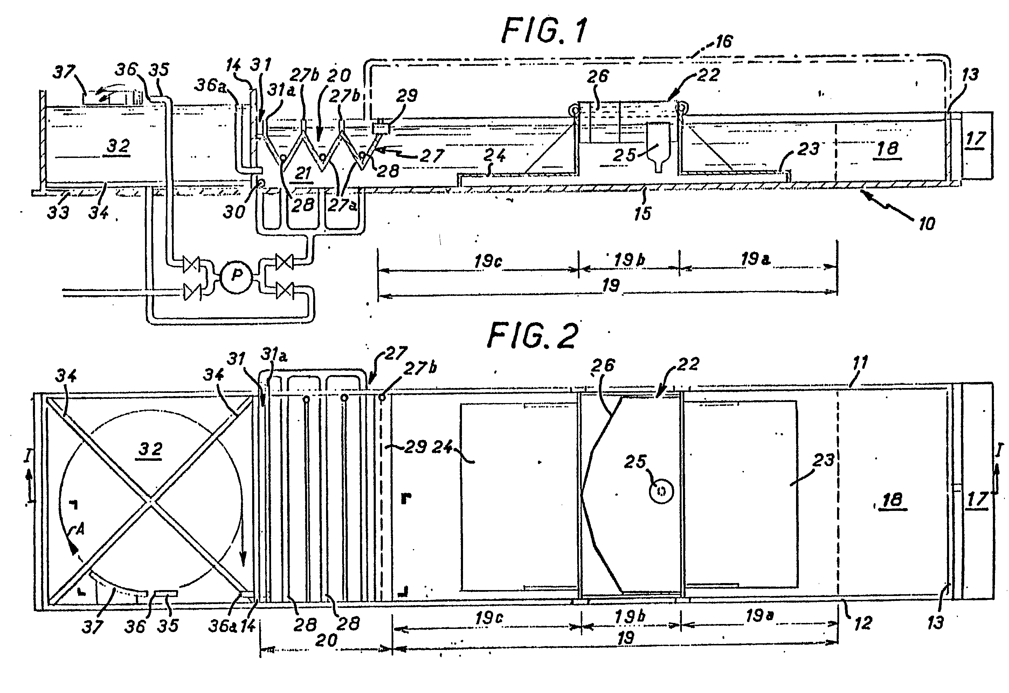

Suivant la forme de réalisation choisie et représentée aux figures 1 et 2, un bassin d'épuration 10 des eaux usées selon l'invention est constitué de deux parois longitudinales 11 et 12, disposées selon la longueur d'un parallélépipède, deux parois transversale 13 et 14 disposées selon la largeur de celui-ci, un fond plat et horizontal 15 et un couvercle 16 pouvant recouvrir partiellement le bassin et étant étanche à l'air. La paroi transversale 13 forme l'extrémité de la partie dite amont du bassin et la paroi transversale 14 forme l'extrémité de la partie dite aval.

Ce bassin est muni à l'amont de sa paroi 13 d'une zone de prétraitement des eaux usées 17, et comporte de l'amont vers l'aval une zone de décantation primaire 18, une zone d'activation 19, une zone de clarification 20 et une zone de stockage des boues 21.

La zone de prétraitement 17 permet de dégriller, de dessabler et de dégraisser les eaux usées de manière connue en soi et ne sera donc pas détaillée dans le cadre de la présente invention.

La zone de décantation primaire 18 permet une décantation des eaux usées prétraitées et se distingue de la zone d'activation 19 par le fait qu'elle n'est jamais aérée.

En aval de la zone de décantation primaire 18 (figures 1 et 2) on trouve un translateur 22 mobile sur la partie haute des parois longitudinales 11 et 12 et portant des moyens d'oxydation des eaux et de remaniement des produits de décantation. Ces moyens de remaniement sont constitués entre autres par deux racleurs de fond 23, 24 disposés l'un en amont, l'autre en aval du moyen d'oxydation ou aérateur 25.

Autour et en aval de l'aérateur 25 une jupe 26 partiellement immergée s'étend sensiblement en demi-cercle de la paroi longitudinale 11 à la paroi longitudinale 12, et est solidaire du translateur 22 avec lequel elle se déplace.

La zone de clarification 20 est constituée par un dispositif de clarification ou clarificateur 27.

La zone de stockage des boues 21 est constitué par le volume compris sous le clarificateur 27.

Ce clarificateur 27 (figures 1 et 2) est constitué d'un système de cloisons obliques 27a inclinées à environ 60°, par rapport à l'horizontale. Ces cloisons ont des inclinaisons alternées et se joignent suivant des arêtes basses et des crêtes. Dans chacune des arêtes basses de ces cloisons, on trouve des tuyaux perforés 28. Un tampon (ou filtre) biologique et/ou mécanique 29, est partiellement ou totalement immergé, et est placé sur l'une quelconque des crêtes formées par les cloisons obliques 27a ou sur plusieurs d'entre elles. Ce filtre peut avantageusement être disposé de façon inclinée par rapport au plan vertical passant par chacune des crêtes ou bien être vertical.

Un tuyau perforé 30 d'aspiration des boues déposées sous le clarificateur 27, est placé à l'extrémité inférieure aval du bassin 10 à proximité de la paroi transversale 14. Cette paroi 14 comporte à son extrémité supérieure une goulotte 31 de récupération des eaux épurées munie d'une lame déversante 31a. Les crêtes formées par les cloisons obliques 27a, portent un évent 27b, constitué d'un simple tuyau débouchant au-dessus du niveau des eaux du bassin 10, et mettant en communication le volume 21 situé sous le clarificateur 27 avec l'air extérieur, ou tout dispositif de récupération de gaz.

Ce volume 21 constitue la zone de stockage des boues du bassin.

En outre un silo de stockage des boues 32 (figures 1 et 2) est avantageusement placé près de la paroi transversale 14 du bassin parallélépipédique 10 de façon soit adjacente soit éloignée de cette paroi 14. Ce silo se compose d'une cuve dont le fond 33 est muni de tuyaux perforés 34 d'aspiration des boues. A proximité de la face supérieure de la cuve débouche un tuyau d'approvisionnement en boues 35 provenant des tuyaux d'aspiration 28 et 30, ce tuyau déverse les boues par son embouchure 36 sur un élément en forme d'arc de cercle 37 ou coude de refoulement. Le silo est muni d'un trop plein 36a qui se déverse sous le clarificateur 27.

Le procédé d'épuration des eaux usées et prétraitées consiste donc dans un premire temps en une décantation primaire des eaux usées, puis en une activation ou aération, puis en une clarification des eaux épurées avant renvoi dans un cours d'eau récepteur ou vers un dispositif de potabilisation (non représenté).

Ces différentes étapes du procédé de traitement des eaux sont décrites ci-après.

L'eau prétraitée est amenée dans la zone de décantation primaire où elle se décante. Les boues recueillies par les râcleurs 23 et 24 dans cette zone de décantation primaire participent activement et de façon primordiale au procédé de traitement des eaux usées, comme cela sera explicité ci-après.

Les eaux s'écoulent ensuite dans la zone d'activation 19. Cette zone d'activation est constituée d'une zone d'oxydation à forte charge massique 19a, puis d'une zone d'oxydation à moyenne charge massique 19b, et d'une zone de décantation et d'oxydation à faible charge massique 19c. Ces différentes zones d'oxydation présentent un rapport "Demande Biochimique en Oxygène (DBO)/biomasse" successivement fort, moyen et faible au fur et à mesure que l'eau avance dans le bassin. Ainsi, une épuration progressive des eaux usées est réalisée et le gradient de stabilisation des boues est également progressif.

En effet, la biomasse présente dans le bassin 10, a des besoins en oxygène qui varient avec l'épuration qu'elle a à effectuer. Immédiatement après la zone de décantation primaire 18, l'épuration doit être importante, c'est pourquoi la demande en oxygène est grande, ce qui explique la nécessité d'aérer fortement l'eau. Plus l'eau avance dans le bassin et plus elle est épurée donc plus la demande en oxygène diminue. Il est à noter cependant que ce ne sont pas les mêmes micro-organismes (biomasse) qui travaillent dans chacune des zones d'oxydation. Plus l'eau est épurée et plus les micro-organismes qui constituent la biomasse sont des organismes complexes.

L'aérateur 25 aspire l'eau et la boue du fond du bassin et la propulse vers le haut pour laisser retomber le mélange (eau + boue) directement sur le plan d'eau contenu dans le bassin, ceci de façon à apporter de l'oxygène aux micro-organismes qui dégradent la matière organique.

L'aérateur se déplace de l'amont vers l'aval et vice-versa, de façon solidaire avec le dispositif supportant les racleurs 23 et 24. Il peut être indifféremment en fonctionnement continu, ou par périodes de durée variable, suivant l'épuration souhaitée, le type et le volume d'eaux usées traitées.

Le rôle de la jupe 26 est de confiner les turbulences créées par l'aérateur 25, donc de protéger des turbulences hydrauliques la partie en aval de cette jupe et de faciliter ainsi la sédimentation des matières en suspension.

Le rôle des racleurs 23, 24 est de stocker les boues sous forme de talus dans la zone de décantation primaire 18 et le long de la paroi transversale 14 et d'en ramener une partie vers les zones d'oxydation 19a, 19b, 19c, lors du retour du translateur. Ces amas de boues provoquent et facilitent des phénomènes de dénitrification et déphosphatation (élimination d'azote et de phosphore) et produisent des matières collagènes et des enzymes. Ces enzymes sont nécessaires à la purification de l'eau.

Ainsi lors du raclage du fond par les racleurs 23 et 24, les boues situées en zone de moindre oxydation sont ramenées vers les zones de forte oxydation et les boues résultant de la décantation primaire 18 sont remplacées par des boues ayant travaillées en milieu aérobie, ce qui améliore leurs qualités épuratrices.

Grâce à la mobilité du translateur et de ses racleurs les boues sont donc constamment remaniées et déplacées (donc dégazées) afin de participer activement à l'épuration et à empêcher l'apparition du phénomène dit de "buifking" dû au dégazage des boues stagnantes.

En aval de la jupe 26 les matières contenues dans l'eau se redécantent. L'eau est ensuite obligée de passer par un tampon biologique et/ou mécanique 29 dont le rôle est de retenir les micro-organismes, les déchets, les boues ayant participé à l'épuration de l'eau. Ce tampon ou filtre 29 peut être placé sur l'une quelconque des crêtes du clarificateur 27 ou sur plusieurs d'entre elles voire même en aval du clarificateur et en amont d'une goulotte de récupération des eaux 31 ou bien en aval de cette goulotte 31. L'essentiel est que l'eau soit filtrée avant d'être rejetée dans le milieu naturel, par exemple dans un cours d'eau, ou dans un dispositif de traitement ultérieur par exemple un dispositif de potabilisation (non représenté).

Lors de son passage dans le clarificateur 27, l'eau s'écoule en flux laminaire généralement horizontal, ce qui provoque le dépôt par gravité, des particules lourdes au fond des cloisons à inclinaison alternée 27a, tandis que l'eau filtrée et clarifiée s'écoule vers la goulotte 31 de récupération des eaux. Le rôle joué par les crêtes supérieures des cloisons obliques 27a est très important. en effet ces crêtes forment avec la surface du plan d'eau un rétreint. Le passage du fluide par ce rétreint favorise l'agglutination des flocs ou boues ce qui les rend plus denses, d'autre part l'inclinaison des parois 27a favorise la sédimentation des flocs qui glissent le long des parois. De plus la circulation des filets des fluides montant et descendant le long des parois inclinées s'organise correctement sans donner naissance à des turbulences. On a donc intérêt à multiplier le nombre de crêtes et le nombre de filtrations.

Les tuyaux perforés 28 récupèrent les boues fines déposées le long des cloisons 27a par aspiration, ou tout autre moyen équivalent. Les évents 27b permettent aux gaz s'accumulant sous le clarificateur de s'échapper. En effet, la réserve de boue 21 constituée sous le clarificateur, dégage une quantité notable de gaz. Ces gaz peuvent bien sûr être recueillis en vue d'utilisations ultérieures.

Le silo concentrateur de boues 32, permet de concentrer les boues reprises au fond et sous le clarificateur 27 par les tuyaux d'aspiration 28 et 30. Ces boues sont amenées par le tuyau 35 et refoulées dans la cuve du silo. La gerbe d'eau et de boues émise par l'embouchure 36 du tuyau 35 est orientée par le coude de refoulement 37 de façon à donner à la masse du liquide une impulsion circulaire (flèche A), allongeant ainsi la trajectoire du liquide injecté, donc augmentant le temps de séparation des boues. Les surnageants c'est-à-dire les éléments à faible concentration de boues sont repris juste en amont du coude de refoulement 37 par le trop-plein 36a dont la canalisation débouche dans le bassin de traîtement 10 pour subir une nouvelle épuration.

Le système de tuyaux d'aspiration 34 situé sur le radier de cet ouvrage, permet de soutirer les boues en excès alors qu'elles se présentent dans leur maximum de concentration. Ces boues soutirées peuvent par exemple être employées comme engrais et envoyées en épandage dans les champs.

Il est également possible de soutirer directement les boues accumulées sous le clarificateur 27 pour les utiliser en épandage grâce à un système de vanne à deux et à trois voies de type connu. Toutes ces opérations de soutirage sont avantageusement effectuées par une pompe P.

Ainsi toutes les opérations d'épuration de l'eau sont réalisées dans un même ouvrage à fond entièrement plat et de forme plus généralement parallélépipédique très allongée. L'eau à épurer traverse impérativement les différentes étapes de l'épuration. Pour chacune de ces étapes, les filets du fluide ont une organisation bien déterminée et rationnelle.

Un des avantages important du procédé est l'élimination de l'azote et du phosphore, lors du remaniement des boues. En effet, la zone d'oxydation du bassin produit nitrites et nitrates. Lorsque les boues sont remaniées par les racleurs du translateur, soit dans la zone de décantation primaire, soit dans la réserve de biomasse aval sous le clarificateur, une dénitrification se produit du fait du passage aérobie/anaérobie, ce qui crée des phénomènes provoquant l'elimination des nutrients (azote, phosphore, ...).

Il est à noter que la jupe 26 peut ne pas être fixée au translateur 22 mais être fixée sur les parois longitudinales 11 et 12 de manière définitive ou amovible. Cependant cette jupe est bien sûr toujours située en amont du clarificateur 27 et en aval de l'aérateur 25.

Il est à noter que l'aérateur 25, permet de réaliser un collage connu en soi en amont du clarificateur 27. En effet l'aérateur 25 projette au-dessus de la surface du plan d'eau un mélange d'eau et de boues qui retombent sur le plan d'eau sous forme de nappe. Lors du déplacement de l'aérateur, cette nappe de boues redescend lentement vers le fond du bassin en piègeant sur son passage une partie des particules en suspension dans l'eau. On réalise ainsi une prédécantation des eaux usées avant leur passage dans le clarificateur 27.

En ce qui concerne le clarificateur et contrairement à l'art antérieur en la matière, l'eau à clarifier entre dans le clarificateur par-dessus et non par-dessous, ce qui a pour avantage une réduction importante de la surface du clarificateur et une meilleure fiabilité.

En effet, un clarificateur conventionnel est calculé d'après sa charge de surface (CS) qui est définie comme

$$CS = \frac{Q}{S} \simeq 2 \times 10^{-4} \; m/s$$

où Q est le débit entrant et S la surface du clarificateur.

Or, le clarificateur selon l'invention permet de passer outre ce type de calcul, car il est à flux laminaire horizontal et la surface à considérer n'est plus la surface du clarificateur seul, mais celle du plan d'eau partant de la paroi amont du bassin jusqu'à la goulotte 31. Ainsi pour le même débit entrant que celui des installations traditionnelles, la surface propre du clarificateur peut être considérablement réduite, entre autres par le fait qu'il faut tenir compte de l'existence des surfaces de la phase de décantation primaire et de la phase d'oxydation. Ainsi la charge de surface est déterminée par la totalité de la surface du bassin de la zone d'activation 19 à la lame déversante 31a et non pas seulement par la surface proprement dite du clarificateur c'est-à-dire de la.cloison 27a la plus en amont, à la lame déversante 31a.

L'essentiel pour le bon fonctionnement du clarificateur est que le bassin 10 soit conçu de telle façon que l'on ait une continuité du film d'eau s'étendant de la paroi amont 13 du bassin jusqu'à la goulotte 31. Cette continuité n'implique pas forcément que le plan d'eau contenu entre ces deux limites soit au même niveau tout le long du bassin. Il existe, en effet, des dispositifs (lame déversante par exemple) permettant que dans deux bassins consécutifs le niveau ne soit pas le même sans pour cela casser la continuité du film d'eau.

Il est à noter que le clarificateur selon l'invention a une double fonction. D'une part, une fonction de clarification qui est effectuée par le volume d'eau compris au-dessus des cloisons 27a et d'autre part une fonction de stockage des boues qui est effectuée par le volume 21 compris en-dessous de ces même cloisons.

Le ou les filtres 29 peuvent être avantageusement inclinés vers l'amont par rapport au plan vertical passant par chacune des crêtes du clarificateur 27, ou bien vertical. Ces dispositions permettent en effet d'utiliser les phénomènes de remous qui sont observés au niveau du passage de crêtes du clarificateur, pour faire légèrement vibrer les filtres 29 et assurer ainsi un décolmatage spontané de ceux-ci. L'inclinaison des filtres, lorsque tel est le cas, facilite par ailleurs ce décolmatage et incite les particules piégées à retomber.

Il est à noter que la disposition en longueur du bassin permet au moment opportun, l'addition, sur toute la longueur de celui-ci de produits participant à l'épuration, par exemple de floculants, comme le sulfate d'alumine, le chlorure ferreux, le dichlorosulfate, de désinfectants ou tout autre produit de nature quelconque (solide, liquide ou gazeux).

Le couvercle 16 ou cloche de confinement peut recouvrir le bassin 10 est étanche et englobe la zone de décantation primaire 18, et les zones d'oxydation 19a, 19b, 19c. Il peut également s'étendre sur l'une quelconque ou plusieurs des zones 18, 19a, 19b, 19c et 20. On peut avantageusement enfermer un mélange gazeux particulier sous ce couvercle : par exemple pour accélérer le processus d'épuration, on peut travailler sous oxygène pur. On peut au contraire ne pas utiliser l'aérateur 25, dès lors le bassin travaille en processus anaérobie et dans ce cas il y a dégazage de gaz pauvre du type méthane, sulfure d'hydrogène, et équivalents. La couvercle sert alors de réceptacle pour ces gaz qui peuvent être par exemple régulièrement soutirés et utilisés en vue de production d'énergie par exemple.

Il est cependant à noter que dès que l'on utilise un couvercle, on place le moteur d'entraînement du translateur 22 à l'extérieur du couvercle de manière à éliminer les risques d'explosions dûs à l'accumulation de gaz sous le couvercle, le passage de l'arbre d'entraînement du moteur est alors rendu étanche en incorporant des paliers dans la paroi du couvercle.

Il est parfois nécessaire de couvrir certaines ou toutes les parties du bassin 10, si l'on travaille à basses températures et si l'on désire, par exemple, se protéger du températures et si l'on désire, par exemple, se protéger du gel.

Bien entendu, la présente invention ne saurait se limiter au mode de réalisation décrit et il est possible d'envisager des variantes sans sortir du domaine de l'invention telle que revendiquée, notamment il est possible de réinjecter l'eau s'écoulant par la goulotte 31 en un ou plusieurs endroits quelconque de l'unité d'épuration. Ainsi l'apport de cette eau, riche en nitrate permet de provoquer une nouvelle dénitrification ce qui améliore le processus d'épuration.

**Revendications**

1) Dispositif de traitement des eaux usées préalablement dégrillées, dessablées et dégraissées, ledit dispositif comprenant :
- un bassin d'épuration unique (10) parallélépipédique à fond plat,
- un moyen d'introduction des eaux usées à une extrémité amont dudit bassin,
- un moyen d'évacuation (31) des eaux clarifiées à une extrémité avale dudit bassin, ledit bassin ayant une zone de décantation primaire (18) adjacente à son extrémité amont (13), une zone de clarification (20) adjacente à son extrémité avale (14), et une zone d'activation (19) entre ladite zone de décantation primaire et la zone de clarification, ladite zone de clarification comportant une partie supérieure pour clarifier les eaux usées et une partie inférieure (21) pour le stockage des boues et la récupération des gaz créés lors de la dénitrification et de la déphosphatation des boues situées sous le clarificateur, ladite partie supérieure de la zone de clarification comprenant une succession de cloisons (27a) d'inclinaisons alternées dont les crêtes et les arêtes basses sont jointives deux à deux, les crêtes formant un rétreint avec la surface supérieure du plan d'eau et les eaux usées décantées et aérées entrant dans ledit clarificateur par sa partie haute, ledit clarificateur étant en outre muni d'un filtre (29),

- un aérateur (25) monté pour mouvement alternatif dans ladite zone d'activation et pour fonctionnement uniquement dans cette zone,

- un moyen de remaniement des boues (23, 24) monté pour mouvement alternatif entre la zone de décantation primaire (18) et la partie inférieure de la zone de clarification (21), ledit moyen de remaniement étant adapté à s'engager au-dessous du clarificateur (27) jusqu'à toucher une paroi transversale (14) d'une part et dans la zone de décantation primaire jusqu'à toucher une paroi transversale (13) d'autre part, le moyen de remaniement des boues étant monté sur un translateur (22) muni d'une jupe (26) destinée à confiner les turbulences créées par l'aérateur (25) à l'aval de ladite jupe.

2) Dispositif selon la revendication 1, caractérisé en ce que le clarificateur (27) est muni de tuyaux perforés (28) d'aspiration des boues, ménagés à proximité desdites arêtes basses.

3) Dispositif selon la revendication 1 ou 2, caractérisé en ce que le ou les filtres (29) sont soit disposés sur une ou plusieurs des crêtes du clarificateur (27) de sorte à assurer le décolmatage des filtres (29) de façon spontanée, soit en amont, soit en aval du clarificateur.

4) Dispositif selon la revendication 1, caractérisé en ce que le moyen de remaniement des boues est constitué par deux râcleurs de fond (23, 24) permettant entre autre de stocker les boues sous forme de talus le long des parois transversales (13, 14) et d'en ramener une partie vers le centre de la zone d'activation (19).

5) Dispositif selon la revendication 1, caractérisé en ce que ladite jupe (26) est soit fixée au translateur (22) et se déplace avec lui, soit placée en amont du clarificateur (27) et en aval de l'aérateur (25).

6) Procédé de traitement des eaux usées mettant en œuvre le dispositif selon l'une quelconque des revendications précédentes, ledit procédé comportant les étapes suivantes :

- introduction des eaux usées dans un bassin (10) parallélépipédique à fond plat,

- décantation primaire (18) de ces eaux dans une zone de décantation primaire adjacente à l'extrémité amont du bassin,

- activation (19) des eaux décantées par oxygénation à forte, moyenne puis faible charge massique au fur-et-à-mesure du déplacement d'un aérateur (25) de l'amont vers l'aval du bassin (10) et vice-versa,

- récupération et remaniement (23, 24) des boues créées lors des étapes de décantation primaire (18) et d'activation (19) au moyen de râcleurs (23, 24) qui les remanient et les stockent sous formes de talus dans les zones de décantation (18) et d'activation (19) et dans une zone de stockage (21) située sous un clarificateur,

- filtration horizontale au moyen d'éléments filtrants (29) biologiques et/ou mécaniques,

- passage des eaux en provenance de la zone d'activation (19) dans la zone de clarification (20) par le dessus d'un clarificateur (27),

- clarification des eaux introduites dans le clarificateur (27) au moyen de cloisons (27a) à inclinaisons alternées favorisant la sédimentation des flocs, ledit clarificateur étant à flux laminaire horizontale et,

- évacuation (31) des eaux clarifiées à l'extérieur dudit bassin parallélépipédique.

7) Procédé selon la revendication 6, caractérisé en ce que l'étape de clarification est effectuée avant l'étape de filtration.

8) Procédé selon la revendication 6 ou 7, caractérisé en ce qu'on effectue le remaniement des boues créées pendant l'étape de décantation primaire et pendant l'étape d'activation à l'aide d'un seul et même organe de remaniement (23, 24).

**Claims**

1. An apparatus for the treatment of waste water, from with grit, sand and grease have first been eliminated, the said apparatus comprising:

- a single flat bottom parallelepiped purification tank (10),

- a means of introducing waste water at an upstream end of the said tank,

- a means (31) of extracting clarified water at a down-stream end of the said tank, the said tank having a primary settlement zone (18) adjacent to its upstream end (13), a clarification zone (20) adjacent to its down-stream end (14) and an activation zone (19) between the said primary settlement zone and the clarification zone, the said clarification zone comprising an upper part for clarifying the waste water and a lower part (21) for storing sludge and for the recovery of gases created during denitrification and dephosphatation of the sludge situated under the clarifier, the said upper part of the clarification zone comprising a succession of partitions (27a) of alternating angle of inclination, of which the top and bottom edges are joined in pairs, the top ridges forming a narrowing or neck with the upper surface of the sheet of water and the decanted and aerated waste water entering the said clarifier through the top, the said clarifier being furthermore provided with a filter (29),

- an aerator (25) mounted for alternating movement in the said activation zone and mounted to function solely in this zone,

- a sludge stirring means (23, 24) mounted for alternating movement between the primary settlement zone (18) and the bottom part of the clarification zone (21), the said stirring means being adapted to engage underneath the clarifier (27) until it touches a transverse wall (14) on the one hand and in the primary settlement zone until it touches a transverse wall (13) on the other, the sludge stirring means being mounted on a traverser (22) provided with a skirt (26) intended to confine the turbulence created by the aerator (25) downstream of the said skirt.

2. An apparatus according to claim 1, characterised in that the clarifier (27) is provided with perforated sludge intake pipes (28) disposed in the vicinity of the said bottom edges.

3. An apparatus according to claim 1 or 2, characterised in that the filter or filters (29) is/are disposed on one or a plurality of the ridges of the clarifier (27) in such a way as to ensure unclogging of the filters (29) spontaneously either upstream or downstream of the clarifier.

4. An apparatus according to claim 1, characterised in that the sludge stirring means consist of two bottom scrapers (23, 24) which make it possible inter alia to store the sludge in the form of bankings along the transverse walls (13, 14) and to return a part to the centre of the activation zone (19).

5. An apparatus according to claim 1, characterised in that the said skirt (26) is either fixed to the transverser (22) and moves with it or is placed upstream of the clarifier (27) and downstream of the aerator (25).

6. A method of treating waste water, employing the apparatus according to any one of the preceding claims, the said method comprising the following stages:
- introduction of waste water into a flat bottom parallelepiped tank (10),
- primary decantation (18) of this water in a primary settlement zone adjacent the upstream end of the tank,
- activation (19) of the decanted water by oxygenation with a high-medium and then low mass charge with progressive displacement of an aerator (25) from the upstream to the downstream side of the tank (10) and vice versa, and
- recovery and reagitation (23, 24) of the sludge created during the primary settlement (18) and activation (19) stages, using scrapers (23, 24) which stir the sludge and store it in the form of bankings in the settlement zone (18) and activation zone (19) and in a storage zone (21) situated under a clarifier,
- horizontal filtration by means of biological and/or mechanical filtering elements (29),
- passage of the water originating from the activation zone (19) into the clarification zone (20) through the top of a clarifier (27),
- clarification of the water introduced into the clarifier (27) by means of alternatingly inclined partitions (27a) which encourage the sedimentation of flankes, the said clarifier being of the horizontal laminar flow type, and
- extraction (31) of the clarified water to the outside of the said parallelepiped tank.

7. A method according to claim 6, characterised in that the clarification stage is performed prior to the filtration stage.

8. A method according to claim 6 or 7, characterised in that the sludge created during the primary settlement stage and during the activation stage is stirred up by one and the same stirring means (23, 24).

**Patentansprüche**

1. Vorrichtung zur Behandlung von Abwasser, das durch einen Rechen gelaufen ist, entsandet und entfettet wurde mit den Merkmalen:
- Ein einziges Reinigungsbecken (10) parallelepipedischer Form mit geradem Boden,
- Mittel zum Einbringen des Abwassers an einem stromaufwärtigen Ende des Beckens,
- Mittel zum Entleeren (31) des geklärten Wassers an einem stromabwärtigen Ende des Beckens, wobei das Becken eine erste Dekantierungszone (18) bei seinem stromaufwärtigen Ende (13), eine Klärzone (20) bei seinem stromabwärtigen Ende (14) und eine Aktivierungszone (19) zwischen der ersten Dekantierzone und der Klärzone aufweist und die Klärzone einen oberen Abschnitt zum Klären des Abwassers und einen unteren Abschnitt (21) zum Ablagern von Schlamm und zur Wiedergewinnung von während der Denitrifikation und Dephosphatisierung des Schlamms unter dem Klärwerk entstandenen Gases, wobei der obere Bereich der Klärzone eine Folge von Wänden mit wechselnder Neigung aufweist, von denen die oberen Ränder und unteren Kanten jeweils miteinander verbunden sind und die oberen Kanten mit der oberen Fläche des Wasserspiegels eine Querschnittsverminderung bilden und das dekantierte sowie luftdurchsetzte Wasser in die Klärvorrichtung an dessen höchstem Abschnitt eintritt, wobei diese des weiteren mit einem Filter (29) ausgestattet ist,
- einem Belüfter (25), der zum wechselweisen Bewegen in der genannten Aktivierungszone angeordnet ist, wobei er nur in dieser Zone arbeitet,
- Mittel zum Bearbeiten des Schlamms (23, 24), die zum wechselweisen Bewegen zwischen der ersten Dekantierungszone (18) und dem tiefer liegenden Abschnitt der Klärzone (21), wobei diese Aufarbeitungsmittel angepaßt sind, einerseits unter die Klärvorrichtung (27) zu greifen, bis sie eine Querwand (14) und andererseits in die Hauptdekantierungszone einzufahren, bis sie eine Querwand (13) berührt, wobei diese Aufarbeitungsmittel für den Schlamm auf einem Fahrzeug mit einer Schürze (26) montiert ist, die dazu bestimmt ist, die Turbulenzen einzuschließen, die durch den Belüfter (25) stromabwärts des Mantels erzeugt worden sind.

2. Vorrichtung nach Anspruch 1, dadurch gekennzeichnet, daß die Klärvorrichtung (27) mit perforierten Belüftungsrohren für den Schlamm ausgestattet ist, die etwa in der Nähe der unteren Kanten angeordnet sind.

3. Vorrichtung nach Anspruch 1 oder 2, dadurch gekennzeichnet, daß der eine oder die mehreren Filter (29) auf einem oder mehreren der oberen Kanten der Klärvorrichtung (27) so angeordnet sind, daß die selbsttätige Reinigung der Filter (29) sowohl stromaufwärts, als auch stromabwärts des Klärwerks sichergestellt ist.

4. Vorrichtung nach Anspruch 1, dadurch gekennzeichnet, daß die Mittel zum Bearbeiten des Schlamms von zwei Bodenschildräumern (23, 24) gebildet werden, die es darüberhinaus ermöglichen, den Schlamm in Form einer Böschung entlang der Querwände (13, 14) anzusammeln und davon einen Teil in Richtung des Zentrums der Aktivierungszone (19) mitzunehmen.

5. Vorrichtung nach Anspruch 1, dadurch gekennzeichnet, daß die Schürze (26) entweder an der Bewegungsvorrichtung (22) befestigt ist und sich mit dieser verschiebt oder stromaufwärts des Klärers (27) und stromabwärts des Belüfters (25) angeordnet sein kann.

6. Verfahren zum Abwasserbehandeln unter Verwendung der Vorrichtung nach einem der vorangegangenen Ansprüche, wobei das Verfahren die folgenden Stufen aufweist:

- Einführen von Abwasser in ein parallelepipedisches Becken (10) mit flachem Boden,
- erstes Dekantieren (18) des Wassers in einer ersten Dekantierzone in der Nähe des oberen Endes des Beckens,
- Aktivierung (19) des dekantierten Wassers durch Oxidation mit starker, mittlerer oder schwacher Last, je nach Ausmaß der Verschiebung eines Belüfters (25) im Becken (10) von stromaufwärts nach stromabwärts und umgekehrt,
- Rückgewinnen und Aufarbeiten (23, 24) des während des primären Dekantierens (18) und der Aktivierung (19) angefallenen Schlamms mittels Schildräumern (23, 24) die diesen bearbeiten und in Form einer Böschung in der Dekantier- (18) und der Aktivierzone (19) und in einer Lagerzone (21) untern einem Klärer ablagern,
- Horizontalfiltern mittels biologischer oder mechanischer Filterelementen (29),
- Weiterleiten des aus Richtung der Aktivierungszone (19) kommenden Wassers in die Klärzone (20) über den oberen Bereich eines Klärers (27) hinweg,
- Klären des in den Klärer (27) eingebrachten Wassers (27) mittels abwechselnd geneigter Scheidewände (27A), welche die Sedimentierung von Flocken begünstigen, wobei der Klärer mit laminarer horizontaler Strömung arbeitet und
- Entleeren (31) des geklärten Wassers aus den parallelepipedischen Becken heraus.

7. Verfahren nach Anspruch 6, dadurch gekennzeichnet, daß die Etappe des Klärens vor der Etappe des Filterns durchgeführt wird.

8. Verfahren nach Anspruch 6 oder 7, dadurch gekennzeichnet, daß man das Bearbeiten des während der Etappe des Primärdekantierens und während der Aktivierungsetappe ein und demselben Bearbeitungsorgan (23, 24) durchführt.

FIG.1

FIG.2

EP 0 237 391 B1